(19) Europäisches Patentamt / European Patent Office / Office européen des brevets

(11) **EP 3 866 359 B1**

(12) **FASCICULE DE BREVET EUROPEEN**

(45) Date de publication et mention de la délivrance du brevet:
**30.11.2022  Bulletin 2022/48**

(21) Numéro de dépôt: **21150957.5**

(22) Date de dépôt: **11.01.2021**

(51) Classification Internationale des Brevets (IPC):
**H04J 3/06** *(2006.01)*    **G05D 1/00** *(2006.01)*
**G06F 1/14** *(2006.01)*    **H04W 4/48** *(2018.01)*
**H04L 7/00** *(2006.01)*

(52) Classification Coopérative des Brevets (CPC):
**G06F 1/10; H04J 3/0661; H04L 7/0083;
H04W 4/48;** H04J 3/0667

(54) **PROCÉDÉ DE COMMANDE D'UN CALCULATEUR D'UN VÉHICULE AUTOMOBILE COMPRENANT UNE HORLOGE ESCLAVE**

VERFAHREN ZUR STEUERUNG EINES KRAFTFAHRZEUGCOMPUTERS, DER EINE SLAVE-UHR UMFASST

METHOD FOR CONTROLLING A COMPUTER FOR A MOTOR VEHICLE COMPRISING A SLAVE CLOCK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.02.2020  FR 2001331**

(43) Date de publication de la demande:
**18.08.2021  Bulletin 2021/33**

(73) Titulaire: **Renault s.a.s**
**92100 Boulogne Billancourt (FR)**

(72) Inventeurs:
• **COAT, Denis**
**78580 Les Alluets le Roi (FR)**
• **LENOIR, Dominique**
**50610 Jullouville (FR)**

(74) Mandataire: **Renault Group
Renault s.a.s.
API : TCR GRA 2 36
1, Avenue du Golf
78084 Guyancourt Cedex (FR)**

(56) Documents cités:
**EP-A1- 3 016 306      EP-A1- 3 157 295
CN-A- 110 752 890**

**Description**

*Domaine technique*

L'invention a pour domaine technique l'horloge interne d'un calculateur, et plus particulièrement la compensation de la dérive de telles horloges.

*Etat de la technique antérieure*

La mise en œuvre de systèmes électroniques embarqués à bord d'un véhicule automobile implique généralement des traitements dépendant du temps, soit dans le déclenchement, soit dans l'ordonnancement. Afin de réaliser de tels traitements, ces systèmes sont munis d'une horloge interne permettant de déterminer l'écoulement du temps et/ou une datation précise. Néanmoins, de telles horloges, souvent basées sur la vibration d'un système électromécanique, notamment d'un quartz piézoélectrique, laissent apparaitre une dérive faussant la détermination du temps. De plus, la dérive constatée peut différer entre deux horloges internes de même conception. Afin de conserver la cohérence du fonctionnement à travers les différents systèmes d'un véhicule, il est alors nécessaire de synchroniser périodiquement ces horloges internes sur une même référence absolue.

Pour réaliser cela, il est nécessaire de faire appel à un mécanisme de synchronisation temporelle. Le mécanisme actuellement utilisé en automobile repose sur des échanges réseaux entre les calculateurs du véhicule et un serveur central, réalisés périodiquement et permettant une remise à l'heure des calculateurs du véhicule par rapport à une référence temporelle maintenue dans le serveur central (cf. normes AUTOSAR de time-stamping 4.2.2 et équivalents). Ceci a pour but de maîtriser une dérive temporelle des horloges locales des calculateurs dans un intervalle acceptable sur le plan fonctionnel durant une mission complète. Il faut donc une adéquation entre les durées de dérives individuelles des calculateurs du véhicule et la période de remise à l'heure de ces derniers. On garantit alors une erreur maximale entre deux équipements d'une même grappe synchronisée pour une performance maîtrisée.

En cas de défaillance de synchronisation des calculateurs du véhicule (également appelés horloges esclaves ou « Time Slaves » en langue anglaise) avec le serveur central (également appelé « horloge maître » ou « Time Master » en langue anglaise), il est nécessaire d'assurer une continuité de service de certaines fonctions, notamment dans le cadre de la conduite autonome....

En cas de défaillance de synchronisation, il existe plusieurs possibilités :

- les horloges esclaves poursuivent avec leur horloge propre, sans possibilité de recalage sur la référence commune initiale. Une dérive s'installe donc pour chacun d'elles à partir de la dernière synchronisation viable. L'erreur de datation des événements/mesures du système augmente régulièrement à partir de ce point et devient, tôt ou tard, inacceptable.
- Une seconde source de synchronisation prend le relais et synchronise les horloges esclaves si elles sont en mesure d'accepter une nouvelle horloge maître. Ce mécanisme demande une implémentation complémentaire, dans une seconde horloge maître, et dans chaque horloge esclave pour sélectionner l'horloge maître valide à chaque moment. Ce dispositif est complexe à mettre en œuvre et demande de multiples validations.
- Les horloges esclaves poursuivent avec leur horloge propre en reproduisant les corrections reçues précédemment (en amplitude et fréquence), de manière à corriger arbitrairement leur dérive propre, permettant ainsi de prolonger le fonctionnel nominal en limitant au mieux les dérives.

Il existe donc un besoin pour un procédé de commande d'un véhicule automobile capable de limiter les dérives naturelles des horloges unitaires afin de maîtriser les écarts relatifs pour conserver une performance acceptable des systèmes concernés le plus longtemps possible.

De l'état de la technique antérieure, on connait les documents suivants.

Le document WO2009009347 divulgue une méthode mise en œuvre pour faciliter la synchronisation entre un ou plusieurs nœuds. Elle est basée sur le fait qu'un ajustement de synchronisation peut être calculé et transmis à un ou plusieurs nœuds afin de faciliter la synchronisation temporelle parmi les nœuds.

Le document US2006083265 mentionne un système classique d'horodatage (« time-stamping » en langue anglaise).

Le document EP3157295 divulgue une méthode de synchronisation temporelle entre des dispositifs sans fil.

*Exposé de l'invention*

L'invention a pour objet un procédé de commande d'un calculateur d'un véhicule automobile comprenant une horloge esclave, le véhicule étant muni d'une connexion à un serveur comprenant une horloge maître, le procédé comprenant:

- au moins une étape de mise à l'heure de l'horloge esclave par application d'une correction à appliquer,
- une étape de filtrage de la correction à appliquer par un filtre passe-bas numérique déterminant une moyenne des valeurs filtrées de la correction à appliquer sur un nombre prédéfini d'occurrences,
- une étape de mémorisation de la moyenne des valeurs filtrées de la correction à appliquer,
- une étape de décision dans laquelle il est déterminé si l'horloge esclave est toujours apte à être synchronisée avec l'horloge maître,

si tel est le cas, le procédé reprend à l'étape de réception d'au moins une donnée de synchronisation,
si tel n'est pas le cas, il est procédé à une étape de correction balistique pour une nouvelle occurrence, dans laquelle il est appliqué à l'horloge esclave tout ou partie de la moyenne mémorisée à un instant de correction déterminé.

Ce procédé permet ainsi de traiter toute dérive temporelle suite à la perte d'un recalage régulier précédent, chaque esclave continuant de traiter ses propres dérives, la précision d'ensemble restant ainsi contenue deux-à-deux horloges maître-esclave le temps du fonctionnement en mode spécifique, c'est-à-dire pendant le temps de non aptitude à la synchronisation standard.

Avantageusement, le procédé comporte une étape de calcul d'un reste par différence entre la valeur de la correction à appliquer et la valeur réellement appliquée à l'étape de correction balistique et une étape de mémorisation de la valeur du reste, ce qui permettra de prendre en compte ce reste ultérieurement.

Avantageusement, ladite au moins une étape de mise à l'heure comporte :

- une étape de réception d'au moins une donnée de synchronisation
- une étape de détermination d'une correction à appliquer à l'horloge esclave de sorte que la valeur de l'horloge esclave soit égale à la valeur de l'horloge maître,
- une étape de synchronisation dans laquelle il est appliqué à l'horloge esclave tout ou partie de la correction déterminée à un instant de correction déterminé, et notamment de mémorisation d'une différence entre la correction déterminée et la correction appliquée comme en tant que correction résiduelle, ce qui s'adapte à de nombreux systèmes d'horodatage.

Avantageusement, à l'étape de correction balistique, il est appliqué à l'horloge esclave tout ou partie de la moyenne mémorisée à un instant de correction déterminé augmentée de la valeur du reste mémorisée ce qui permet de prendre en considération la valeur du reste de l'occurrence précédente avant la troncature liée notamment à la précision de l'horloge esclave.

De manière avantageuse, la valeur du reste mémorisée est initialisée à la valeur de la correction résiduelle, ce qui permet comme précédemment de prendre en considération cette correction résiduelle qui correspond au dernier reste avant la perte de communication fiable et donc la perte de la synchronisation standard, cela assure donc la continuité entre le mode de fonctionnement standard et le mode de fonctionnement spécifique.

Avantageusement, l'instant de correction déterminé est fonction d'une période de correction prédéfinie, cette périodicité permet notamment de se caler sur la fréquence des trames de synchronisation.

On peut déterminer la moyenne des valeurs filtrées par l'intermédiaire d'une méthode autorégressive, ce qui est simple et offre une moyenne affinée avec le temps, contrairement à une moyenne glissante qui constitue un exemple d'autre moyen.

Avantageusement, le filtre est initialisé par la moyenne des valeurs filtrées mémorisée. On peut ainsi initialiser le filtre dès la première occurrence lors du calcul de sortie du filtre, ce qui permet de gagner par la suite du temps de convergence du filtre.

Le filtre peut être un filtre de Butterworth du second ordre, ce qui permet notamment d'avoir une sensibilité réduite aux fréquences basses de remise à l'heure.

Avantageusement, la durée en continu de commande sans que l'horloge esclave soit apte à être synchronisée avec l'horloge maître de référence est limitée, par exemple à 2 minutes. Cette durée de référence comportant le temps passé dans les étapes 7,8,9 peut être égale à 2 minutes, ce qui permet une durée de fonctionnement en mode spécifique du système allouant une marge de manœuvre suffisante pour un dépannage d'urgence du véhicule, sachant que ce mode sur lequel reposent des fonctions essentielles de conduite automatisée, demeure satisfaisante et confortable sans maître.

L'invention a également pour objet un système de commande d'un calculateur d'un véhicule automobile comprenant une horloge esclave, le véhicule étant muni d'une connexion à un serveur comprenant une horloge maître, le calculateur étant apte à exécuter les étapes de procédé décrites ci-dessus.

Le procédé de commande et le système selon l'invention présentent en outre les avantages suivants :

- Le mécanisme utilisé est simple et facile à valider ;
- Chaque esclave est capable de continuer à appliquer des correctifs en totale autonomie.

**Brève description des dessins**

D'autres buts, caractéristiques et avantages de l'invention apparaîtront à la lecture de la description suivante, donnée uniquement à titre d'exemple non limitatif et faite en référence aux dessins annexés sur lesquels :

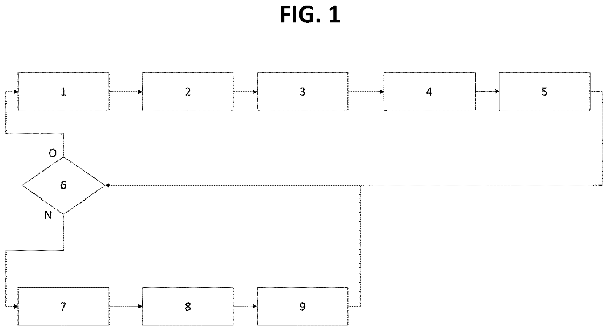

La figure 1 illustre les principales étapes d'un procédé de commande d'un calculateur selon l'invention.

**Description détaillée**

Lors de la perte de synchronisation avec une horloge maître, on cherche à limiter les dérives naturelles des horloges esclaves afin de maîtriser les écarts relatifs pour conserver une performance acceptable des systèmes concernés le plus longtemps possible ou a minima durant une période de conduite autonome, par exemple, jusqu'à la mise en sécurité du véhicule ou la reprise en main par le conducteur. Une durée de référence est par exemple de 2 minutes, ce qui correspond à une durée de gestion d'un état de défaillance pour des niveaux de délégation de conduite sans conducteur. Il est cependant possible d'étendre ce temps, moyennant une étude complémentaire de l'influence des variations d'environnement sur la précision des horloges utilisées dans les calculateurs.

On rappelle que les horloges internes de calculateurs sont basées généralement sur des systèmes électromécaniques, notamment piézoélectriques de type quartz ou oscillateurs.

Un quartz d'horloge induit une dérive intrinsèque de 20 à 50ppm environ, ce qui représente environ 2,4ms à 6ms de dérive pour la période de référence de 2 minutes citée ci-dessus. Pour un oscillateur piézoélectrique, la dérive à considérer est plus importante, environ 5000ppm (0,5%), soit une dérive de 600ms pour la même période de référence de 2 minutes d'utilisation. Sur un temps relativement court (quelques minutes) et dans des conditions d'utilisation stabilisée (température, vibrations...), ces dérives peuvent être considérées constantes. On se place ici sous cette hypothèse de fluctuation faible.

En l'absence de synchronisation avec une horloge maître, il est proposé de corriger la dérive des horloges esclaves à bord du véhicule de façon arbitraire en fonction de l'historique des corrections effectuées lorsque les horloges esclaves étaient synchronisées avec l'horloge maître. Une telle correction est généralement appelée correction balistique.

Une telle correction est particulièrement intéressante lorsque la synchronisation avec l'horloge maître n'est pas possible. Il est alors possible de continuer à corriger les dérives en appliquant des corrections similaires aux corrections appliquées dans le passé lorsque la synchronisation avec l'horloge maître était possible.

Le principe de la correction est le suivant :

- Considérant les dernières remises à l'heure effectuées sur un temps suffisamment long, supérieur à la durée de référence, une correction moyenne est calculée. Cette correction moyenne correspond à la dérive relative de l'horloge esclave de l'équipement par rapport à l'horloge maître ;
- On applique cette correction moyenne de manière arbitraire en cas de défaillance détectée du mécanisme de synchronisation pour réaliser une correction de dérive que l'on peut qualifier de balistique, pour illustrer le mode de prédiction de la dérive à la façon d'une trajectoire balistique dont les éléments de calculs sont liés au tir et peuvent se déduire de la trajectoire.

Ainsi dès le diagnostic de dysfonctionnement de la synchronisation avec l'horloge maître, l'horloge esclave passe à un fonctionnement en mode spécifique au cours duquel on réalise une correction balistique de la dérive.

Le diagnostic de dysfonctionnement de la synchronisation avec l'horloge maître peut être réalisé en fonction de l'interruption de réception de trames de synchronisation, ou toute autre méthode appropriée (telles que la corruption des données de synchronisations reçues ou encore en fonction des défaillances de communication avec le maître identifiées par exemple par l'interruption ou l'invalidité des trames rapides (hors trames de synchronisation) reçues).

Pour pouvoir appliquer la correction balistique, on calcule, avant la défaillance, la moyenne des corrections réalisées pour l'horloge esclave. Diverses méthodes peuvent être employées pour déterminer la moyenne, dès lors que leur précision de calcul ne génère pas une erreur supérieure à la durée de référence. Néanmoins, une méthode autorégressive est préférée pour réduire la puissance de calcul et le coût mémoire nécessaires.

Après la défaillance, on applique une correction arbitraire déterminée avec une périodicité calculée ou correspondante à la périodicité de correction durant la synchronisation précédant la défaillance.

Cette méthode de correction va maintenant être décrite plus précisément.

Lorsque l'horloge esclave est synchronisée avec l'horloge maître, on détermine la correction à appliquer, avec une précision éventuellement supérieure à la précision de l'horloge esclave. Cela se produit par exemple si la correction à appliquer est égale à 1,18μs alors que la précision de l'horloge esclave est égale à la microseconde, ce qui demande une troncature à 1μs.

On détermine la correction applicable en fonction de la précision de l'horloge esclave et on mémorise une correction résiduelle à ajouter à la prochaine correction à appliquer. En effet, la résolution maximale de l'horloge esclave ne permet pas toujours de prendre en compte la précision complète de la correction calculée, la troncature donnant lieu à la correction résiduelle. Dans l'exemple ci-dessus, on applique ainsi une correction de 1μs et on mémorise une correction résiduelle de 0,18μs.

De manière non limitative, un exemple de synchronisation avec une horloge maître est la synchronisation AUTOSAR, synchronisation standardisée dans le monde automobile.

La périodicité de synchronisation est ici choisie égale à 500ms.

La synchronisation avec l'horloge maître est assurée par la réception de trames à la périodicité de synchronisation, chaque trame étant comparée à des trames émises avec la même périodicité par l'horloge esclave. La différence entre l'instant de réception de la trame provenant de l'horloge maître et l'instant de réception de la trame provenant de l'horloge esclave est égale à la correction à appliquer.

La correction est ensuite filtrée par un filtre numérique passe-bas.

Le filtre passe-bas présente avantageusement les caractéristiques suivantes :

- Sensibilité réduite aux fréquences basses de remise à l'heure (exemple : 1 ms de mise à jour toutes les 2 minutes, qui correspondrait à la durée de fonctionnement souhaité sans horloge maître).
- Sensibilité maximale d'une milliseconde d'écart en fin de période de fonctionnement en défaillance.
- Erreur de calcul de moyenne inférieure à la durée de référence en fin de période de défaillance de la synchronisation.

Un tel filtre peut être obtenu en choisissant un filtre de Butterworth du second ordre, avec une fréquence réduite de coupure 1/480 (la valeur de 480 provenant ici du choix d'une durée de référence de 2 minutes avec une périodicité de synchronisation de 500 ms de l'horloge esclave).

Il est à noter que le filtre peut être initialisé en début de mission pour éviter une valeur nulle par défaut conduisant à un délai de près de 500 itérations avant convergence du filtre. La sortie filtrée est mémorisée à chaque itération. L'initialisation du filtre numérique par pré-remplissage des valeurs des échantillons discrets (à savoir les entrées et sorties du filtre à l'itération (ou pas de temps) précédent et à l'itération encore précédents pour un filtre de deuxième ordre) du filtrage par la valeur moyenne précédemment mémorisés permet avantageusement de gagner en temps de convergence et réduire à moins de 300 itérations la convergence du filtre.

Lorsque l'on détecte une perte de synchronisation avec l'horloge maître, l'horloge esclave passe dans le mode de fonctionnement en mode spécifique.

La perte de synchronisation peut être détectée lors de l'apparition de pertes de trames CAN, de trames corrompues, de valeurs invalides, ou d'autre source fiable de diagnostic de cette perte de synchronisation.

La valeur mémorisée de la moyenne des corrections est alors figée. Elle n'est plus recalculée par le filtre.

Comme évoqué plus haut, après la défaillance, on applique une correction arbitraire déterminée avec une périodicité calculée ou correspondante à la périodicité de correction durant la synchronisation précédant la défaillance. Cette correction peut également être additionnée de la dernière valeur de correction résiduelle mémorisée, comme décrit précédemment.

En effet, en l'absence de synchronisation avec une horloge maître, la périodicité de correction est déterminée en fonction des trames émises par l'horloge esclave. Toutefois, l'instant d'émission des trames est lié à l'horloge esclave et partage avec elle la même incertitude. On considère néanmoins que l'incertitude rapportée à la périodicité de correction est de second ordre (25μs pour un quartz, 2,5ms pour un oscillateur piézoélectrique).

La correction à appliquer est égale au cumul de la correction moyenne mémorisée, ajoutée à chaque récurrence, et des écarts résiduels entre les corrections à appliquer et les corrections réellement appliquées. A une récurrence donnée n, la correction à appliquer est déterminée par l'équation suivante :

[Math 3]

$$Corr.app_{n+1} = Corr_{moyenne} + \sum_{k=1}^{n} Corr_{moyenne} + Corr.app_k - Corr.réal_k$$

Où :

*Corr.app*$_{n+1}$ : correction à appliquer au pas de temps n+1.
*Corr*$_{moyenne}$ : correction moyenne issue du filtre
*Corr.app*$_k$ : correction à appliquer au pas de temps k
*Corr.réal*$_k$ : correction réellement appliquée au pas de temps k

En appliquant cette équation à une durée de référence de 2 minutes, avec une mise à jour chaque 500ms, représentant 240 occurrences, on calcule l'erreur maximale par application de l'équation suivante :

[Math 4]

$$Err.max_{240} = 240.Err_{moyenne} + 239.Err_{synchro.corr}$$

Où :

*Err.max*$_{240}$ : erreur commise sur 240 pas de temps.
*Err*$_{moyenne}$ : erreur d'estimation de la moyenne issue du filtre
*Err*$_{synchro.corr}$ : erreur de synchronisation liée à la dérive locale elle-même
L'erreur maximale est alors majorée par 0,12 ms par rapport à l'erreur obtenue avec une synchronisation avec une horloge maître, ce qui est bien inférieur à la milliseconde souhaitée.

Le procédé de commande d'un calculateur d'un véhicule automobile muni d'une connexion à un serveur comprenant une horloge maître, illustré par la figure 1, va maintenant être décrit. Le serveur est ici embarqué dans le véhicule, il s'agit d'un calculateur maître, mais il pourrait également être en dehors du véhicule et communiquer à distance avec les calculateurs esclaves internes par communication cellulaire, telle que 2G et/ou 3G et/ou 4G et/ou LTE et/ou 5G.
Au cours d'une première étape 1 de réception d'au moins une donnée de synchronisation, le calculateur esclave reçoit l'ensemble des données pour procéder à sa mise à l'heure éventuelle. Cette étape 1 de réception est périodique, sachant que la périodicité de synchronisation est ici choisie égale à 500ms. La nature des données de synchronisation est par exemple une heure, quel que soit son format, il s'agit de données de mise à l'heure.
Au cours d'une deuxième étape 2 de détermination de la correction, le calculateur esclave détermine une correction d'horloge en fonction de la donnée de synchronisation reçue. La correction correspondant à la dérive propre du calculateur esclave.
Au cours d'une troisième étape 3 de synchronisation, tout ou portion de la correction déterminée à l'étape 2 est appliquée à l'horloge esclave à l'instant de correction périodique déterminé, c'est-à-dire par exemple toutes les 500 ms (qui peut être le même instant que celui de l'étape 1 si on considère négligeable le temps écoulé jusqu'à l'étape 3), en fonction de sa précision. Le reste de la correction tronquée est mémorisée en tant que correction résiduelle pour être éventuellement utilisée lors de la perte de synchronisation.
Le procédé se poursuit ensuite par une quatrième étape 4 de filtrage passe-bas, au cours de laquelle on réalise à chaque itération un filtrage de la correction à appliquer par un filtre passe-bas numérique. On détermine ainsi une moyenne Corr$_{moyenne}$ des valeurs filtrées de la correction à appliquer, obtenue sur un nombre prédéfini d'itérations. Comme énoncé précédemment, ce filtre peut avantageusement être initialisé par la valeur de moyenne précédemment mémorisée lors de la cinquième étape 5, afin de réduire le temps de convergence de ce filtre. Cette valeur d'initialisation non nulle est disponible très rapidement dans la vie du véhicule et plus précisément dans la vie du calculateur exécutant le procédé, c'est-à-dire dès que le procédé a été appliqué jusqu'à l'étape 5 une première fois, et que l'espace mémoire contenant la valeur de la moyenne filtrée mémorisée n'est plus vierge, puis ces valeurs s'affineront ainsi avec le temps de roulage accumulé.
Lors d'une cinquième étape 5 de mémorisation de la correction Corr$_{moyenne}$, on mémorise la dernière valeur filtrée représentant la moyenne des corrections à appliquer, cette valeur convergeant progressivement avec le temps.
Dans l'étape 6 de décision, on détermine si le système est toujours apte à être synchronisé, c'est-à-dire en communication fiable avec l'horloge maître. C'est à dire qu'on détermine si le calculateur esclave est toujours connecté au calculateur maître en recevant les trames valides, notamment de synchronisation, ou non. Cette étape peut avoir au cours d'une période de synchronisation, à n'importe quelle itération, ou alternativement n'avoir lieu qu'aux instants de synchronisation, notamment si les seules trames utilisées pour la prise décision sont les trames de synchronisation. Si l'on reçoit toujours ces trames valides, le processus reprend à l'étape 1. Si l'on a perdu la communication fiable avec le calculateur maître, on poursuit le processus à l'étape 7, décrite ci-après.
Dans l'étape 7 de correction balistique, on applique tout ou portion de la dernière correction moyenne mémorisée, augmentée de la précédente valeur de reste mémorisée à l'étape 9 (initialisée à zéro pour la première occurrence, ou si on en dispose, initialisée à la dernière valeur de reste de la correction tronquée mémorisée à l'étape 3) à l'horloge du calculateur esclave en fonction de sa précision à l'instant de correction déterminé, c'est-à-dire au temps de cycle défini et usuel, par exemple tous les 500ms comme proposé précédemment. Ainsi, par exemple, si une défaillance de communication se produit entre les instants t et t+1 séparés de 500 ms, à t : la synchronisation de l'horloge esclave aura été faite tel que décrit à l'étape 3 et à t+1 : la correction de l'horloge esclave se fera tel que décrit à l'étape 7, la détection de perte de trames ayant été détectée entre les deux instants et la décision de l'étape 6 prise aussitôt.

Dans l'étape 8 de calcul du reste qui suit l'étape 7 précédente, on calcule l'écart entre la valeur de la correction à appliquer et la valeur réellement appliquée. On distingue la correction à appliquer de la correction réellement appliquée du fait de la précision de l'horloge esclave qui n'est pas la même que celle de l'horloge maitre et de l'existence d'arrondis et de résolutions limites pouvant faire apparaitre une différence entre ces valeurs.

Dans l'étape 9 de mémorisation, on mémorise la valeur du reste précédemment calculé puis on reboucle à l'étape 6 de décision, le reste de la correction tronquée mémorisée en tant que correction résiduelle pouvant être éventuellement utilisée lors de la prochaine étape 3 de synchronisation ou 7 de correction.

Avantageusement, un compteur de temps passé dans les étapes 7, 8 et 9 de fonctionnement en mode spécifique permet de limiter l'utilisation continue de ce mode à une durée de référence, par exemple égale à 2 minutes, en procédant par exemple à un arrêt autonome sécurisé sur voie d'urgence du véhicule avec arrêt du moteur, si ceci n'a pas déjà eu lieu.

## Revendications

1. Procédé de commande d'un calculateur d'un véhicule automobile comprenant une horloge esclave, le véhicule étant muni d'une connexion à un serveur comprenant une horloge maître, le procédé comprenant:

   - au moins une étape de mise à l'heure de l'horloge esclave par application d'une correction à appliquer,
   - une étape (4) de filtrage de la correction à appliquer par un filtre passe-bas numérique déterminant une moyenne $Corr_{moyenne}$ des valeurs filtrées de la correction à appliquer sur un nombre prédéfini d'occurrences,
   - une étape (5) de mémorisation de la moyenne $Corr_{moyenne}$ des valeurs filtrées de la correction à appliquer,
   - une étape (6) de décision dans laquelle il est déterminé si l'horloge esclave est toujours apte à être synchronisée avec l'horloge maître, c'est-à-dire en communication fiable avec l'horloge maître,
   si tel est le cas, le procédé reprend à une étape (1) de réception d'au moins une donnée de synchronisation,
   si tel n'est pas le cas, il est procédé à une étape (7) de correction balistique pour une nouvelle occurrence, dans laquelle il est appliqué à l'horloge esclave tout ou partie de la moyenne $Corr_{moyenne}$ mémorisée à un instant de correction déterminé.

2. Procédé de commande selon la revendication précédente, **caractérisé en ce qu'**il comporte une étape (8) de calcul d'un reste par différence entre la valeur de la correction à appliquer et la valeur réellement appliquée à l'étape (7) de correction balistique et une étape (9) de mémorisation de la valeur du reste.

3. Procédé de commande selon l'une quelconque des revendications précédentes , dans lequel ladite au moins une étape de mise à l'heure comporte :

   - l'étape (1) de réception d'au moins une donnée de synchronisation
   - une étape (2) de détermination d'une correction à appliquer à l'horloge esclave de sorte que la valeur de l'horloge esclave soit égale à la valeur de l'horloge maître,
   - une étape (3) de synchronisation dans laquelle il est appliqué à l'horloge esclave tout ou partie de la correction déterminée à un instant de correction déterminé, et notamment de mémorisation d'une différence entre la correction déterminée et la correction appliquée comme en tant que correction résiduelle.

4. Procédé de commande selon la revendication 2 ou selon la revendication 3 dans sa dépendance avec la revendication 2, dans lequel à l'étape (7) de correction balistique pour une nouvelle occurrence, il est appliqué à l'horloge esclave tout ou partie de la moyenne $Corr_{moyenne}$ mémorisée à un instant de correction déterminé augmentée de la valeur du reste mémorisée.

5. Procédé de commande selon les revendications 3 et 4, dans lequel la valeur du reste mémorisée est initialisée à la valeur de la correction résiduelle.

6. Procédé de mise à l'heure selon l'une quelconque des revendications précédentes, dans lequel l'instant de correction déterminé est fonction d'une période de correction prédéfinie.

**7.** Procédé de commande selon l'une quelconque des revendications précédentes, dans lequel la moyenne des valeurs filtrées est déterminée par une méthode autorégressive.

**8.** Procédé de commande selon l'une quelconque des revendications précédentes, dans lequel le filtre est initialisé par la moyenne $Corr_{moyenne}$ des valeurs filtrées mémorisée.

**9.** Procédé de commande selon l'une quelconque des revendications précédentes, dans lequel le filtre est un filtre de Butterworth du second ordre.

**10.** Procédé de commande selon l'une quelconque des revendications précédentes, dans lequel la durée en continu de commande sans que l'horloge esclave soit apte à être synchronisée avec l'horloge maître de référence est limitée, par exemple à 2 minutes.

**11.** Système de commande d'un calculateur d'un véhicule automobile comprenant une horloge esclave, le véhicule étant muni d'une connexion à un serveur comprenant une horloge maître, le calculateur étant apte à exécuter les étapes de procédé selon l'une quelconque des revendications précédentes.

**Patentansprüche**

**1.** Verfahren zum Steuern eines eine Nebenuhr enthaltenden Rechners eines Kraftfahrzeugs, wobei das Fahrzeug mit einer Verbindung mit einem eine Hauptuhr enthaltenden Server versehen ist, wobei das Verfahren enthält:

- mindestens einen Schritt der Zeiteinstellung der Nebenuhr durch Anwenden einer anzuwendenden Korrektur,
- einen Schritt (4) des Filterns der anzuwendenden Korrektur durch einen digitalen Tiefpassfilter, der einen Mittelwert $Corr_{moyenne}$ der gefilterten Werte der anzuwendenden Korrektur über eine vordefinierte Anzahl von Vorkommen bestimmt,
- einen Schritt (5) des Speicherns des Mittelwerts $Corr_{moyenne}$ der gefilterten Werte der anzuwendenden Korrektur,
- einen Schritt (6) der Entscheidung, in dem bestimmt wird, ob die Nebenuhr immer noch geeignet ist, mit der Hauptuhr synchronisiert zu werden, d.h. in zuverlässiger Kommunikation mit der Hauptuhr ist,
wenn ja, beginnt das Verfahren in einem Schritt (1) des Empfangs mindestens eines Synchronisationsdatenwerts wieder von Neuem,
wenn nein, wird ein Schritt (7) ballistischer Korrektur für ein neues Vorkommen durchgeführt, in dem der ganze oder ein Teil des Mittelwerts $Corr_{moyenne}$ an die Nebenuhr angewendet wird, der zu einem bestimmten Korrekturzeitpunkt gespeichert wurde.

**2.** Steuerverfahren nach dem vorhergehenden Anspruch, **dadurch gekennzeichnet, dass** es einen Schritt (8) der Berechnung eines Rests durch Differenz zwischen dem Wert der anzuwendenden Korrektur und dem tatsächlich im Schritt (7) ballistischer Korrektur angewendeten Wert und einen Schritt (9) des Speicherns des Werts des Rests aufweist.

**3.** Steuerverfahren nach einem der vorhergehenden Ansprüche, wobei der mindestens eine Schritt der Zeiteinstellung aufweist:

- den Schritt (1) des Empfangs mindestens eines Synchronisationsdatenwerts,
- einen Schritt (2) der Bestimmung einer an die Nebenuhr anzuwendenden Korrektur, damit der Wert der Nebenuhr gleich dem Wert der Hauptuhr ist,
- einen Schritt (3) der Synchronisation, in dem die ganze oder ein Teil der zu einem bestimmten Korrekturzeitpunkt bestimmten Korrektur an die Nebenuhr angewendet wird, und insbesondere des Speicherns einer Differenz zwischen der bestimmten Korrektur und der angewendeten Korrektur als Restkorrektur.

**4.** Steuerverfahren nach Anspruch 2 oder nach Anspruch 3 in seiner Abhängigkeit von Anspruch 2, wobei im Schritt (7) ballistischer Korrektur für ein neues Vorkommen der ganze oder ein Teil des zu einem bestimmten Korrekturzeitpunkt gespeicherten Mittelwerts $Corr_{moyenne}$ erhöht um den Wert des gespeicherten Rests an die Nebenuhr angewendet wird.

**5.** Steuerverfahren nach den Ansprüchen 3 und 4, wobei der Wert des gespeicherten Rests mit dem Wert der Restkorrektur initialisiert wird.

**6.** Zeiteinstellverfahren nach einem der vorhergehenden Ansprüche, wobei der bestimmte Korrekturzeitpunkt von einer vordefinierten Korrekturperiode abhängt.

**7.** Steuerverfahren nach einem der vorhergehenden Ansprüche, wobei der Mittelwert der gefilterten Werte durch eine autoregressive Methode bestimmt wird.

**8.** Steuerverfahren nach einem der vorhergehenden Ansprüche, wobei der Filter durch den gespeicherten Mittelwert $Corr_{moyenne}$ der gefilterten Werte initialisiert wird.

**9.** Steuerverfahren nach einem der vorhergehenden Ansprüche, wobei der Filter ein Butterworth-Filter zweiter Ordnung ist.

**10.** Steuerverfahren nach einem der vorhergehenden Ansprüche, wobei die kontinuierliche Steuerzeitdauer, ohne dass die Nebenuhr mit der Bezugs-Hauptuhr synchronisierbar ist, begrenzt ist, zum Beispiel auf 2 Minuten.

**11.** Steuersystem eines eine Nebenuhr enthaltenden Rechners eines Kraftfahrzeugs, wobei das Fahrzeug mit einer Verbindung mit einem eine Hauptuhr enthaltenden Server versehen ist, wobei der Rechner fähig ist, die Verfahrensschritte nach einem der vorhergehenden Ansprüche auszuführen.

**Claims**

**1.** Method for controlling a computer of a motor vehicle comprising a slave clock, the vehicle being equipped with a connection to a server comprising a master clock, the method comprising:

- at least one step of setting the slave clock by applying a correction to be applied,
- a step (4) of filtering the correction to be applied through a digital low-pass filter determining an average $Corr_{average}$ of the filtered values of the correction to be applied over a predefined number of occurrences,
- a step (5) of storing the average $Corr_{average}$ of the filtered values of the correction to be applied,
- a step (6) of deciding in which it is determined whether the slave clock is still able to be synchronized with the master clock, that is to say in reliable communication with the master clock,
if this is the case, the method resumes at a step (1) of receiving at least one synchronization datum,
if this is not the case, the method proceeds to a ballistic correction step (7) for a new occurrence, in which there is applied, to the slave clock, all or some of the average $Corr_{average}$ which is stored at a determined correction instant.

**2.** Control method according to the preceding claim, **characterized in that** it comprises a step (8) of computing a remainder by finding the difference between the value of the correction to be applied and the value actually applied in the ballistic correction step (7) and a step (9) of storing the value of the remainder.

**3.** Control method according to either one of the preceding claims, in which said at least one setting step comprises:

- the step (1) of receiving at least one synchronization datum,
- a step (2) of determining a correction to be applied to the slave clock so that the value of the slave clock is equal to the value of the master clock,
- a step (3) of synchronizing in which all or some of the determined correction is applied to the slave clock at a determined correction instant, and notably of storing a difference between the determined correction and the applied correction as a residual correction.

**4.** Control method according to Claim 2 or according to Claim 3 as dependent on Claim 2, in which, in the ballistic correction step (7) for a new occurrence, there is applied, to the slave clock, all or some of the average $Corr_{average}$ which is stored at a determined correction instant, increased by the stored value of the remainder.

**5.** Control method according to Claims 3 and 4, in which the stored value of the remainder is initialized to the value of the residual correction.

6. Setting method according to any one of the preceding claims, in which the determined correction instant is dependent on a predefined correction period.

7. Control method according to any one of the preceding claims, in which the average of the filtered values is determined via an autoregression method.

8. Control method according to any one of the preceding claims, in which the filter is initialized by the stored average $Corr_{average}$ of the filtered values.

9. Control method according to any one of the preceding claims, in which the filter is a second-order Butterworth filter.

10. Control method according to any one of the preceding claims, in which the continuous control time without the slave clock being able to be synchronized with the reference master clock is limited, for example to 2 minutes.

11. System for controlling a computer of a motor vehicle comprising a slave clock, the vehicle being equipped with a connection to a server comprising a master clock, the computer being able to perform the method steps according to any one of the preceding claims.

# FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009009347 A
- US 2006083265 A
- EP 3157295 A